# EUROPÄISCHE PATENTSCHRIFT

(11) **EP 1 499 922 B1**
(45) Veröffentlichungstag und Bekanntmachung des Hinweises auf die Patenterteilung: **12.10.2005**
(21) Anmeldenummer: 02737830.6
(22) Anmeldetag: 03.05.2002
(51) Int. Cl.: G03B 21/56, E04B 9/26

(54) **PROJEKTIONSWAND MIT MEHREREN KUGELABSCHNITTSFÖRMIGEN SEGMENTEN**
PROJECTION SCREEN WITH SEVERAL SPHERICAL SECTION SEGMENTS
PAROI DE PROJECTION DOTEE DE PLUSIEURS PARTIES EN FORME DE SEGMENTS DE SPHERE

(30) Priorität: 22.04.2002 DE 20206392 U
(43) Veröffentlichungstag der Anmeldung: 26.01.2005
(73) Patentinhaber: Erlas Erlanger Lasertechnik GmbH, 91056 Erlangen (DE)
(72) Erfinder: HOFFMANN, Peter, 90425 Nürnberg (DE)
(74) Vertreter: Köhler, Walter
(86) Internationale Anmeldenummer: PCT/DE2002/001616
(87) Internationale Veröffentlichungsnummer: WO 2003/089987

(56) Entgegenhaltungen:
- US-A- 4 318 589
- US-A- 5 130 846
- US-A- 5 140 790
- US-A- 6 128 130

## Beschreibung

Die Erfindung betrifft eine Projektionswandanlage mit einer Projektionswand, die einen oder mehrere jeweils kugelabschnittsförmige Projektionswandabschnitte aufweist, wobei der Projektionswandabschnitt aus mehreren Segmenten gebildet ist, wobei das Segment Eckpunkte und zwischen den Eckpunkten verlaufende Verbindungsstoßlinien aufweist, wobei benachbarte Segmente entlang einer gemeinsamen Verbindungsstoßlinie dicht aneinander liegen sowie eine Projektionswandanlage mit einer Projektionswand, die eine oder mehrere kugelabschnittsförmige Projektionswandabschnitt bildende Baugruppen aufweist, wobei die Baugruppe aus mehreren Segmentbaueinheiten gebildet ist, wobei jede Segmentbaueinheit Profile-mit Verbindungsstoßflächen und Segmente aufweist, wobei die Segmentbaueinheiten mit den Verbindungsstoßflächen aneinanderliegen.

Die US 5 130 846 A offenbart eine Projektionswandanlage mit einer Projektionswand, die einen oder mehrere kugelabschnittsförmige Projektionswandabschnitte aufweist, wobei jeder Projektionswandabschnitt aus mehreren Segmenten gebildet ist, wobei jedes Segment Eckpunkte mit dazwischenliegenden Verbindungsstoßlinien aufweist und benachbarte Segmente entlang einer gemeinsamen Verbindungsstoßlinie dicht aneinander liegen, wobei jedes Segment mindestens drei Verbindungstoßlinien aufweist und jede von ihnen in einer ihr zugeordneten Ebene liegt. Weitere Angaben über die Lage dieser Ebenen lassen sich dieser Patentschrift nicht entnehmen.

Die US 4 318 589 A betrifft ebenfalls eine Projektionswandanlage mit segmentierten Projektionswandabschnitten, wobei jedoch keine Details über die Ausgestaltung der Verbindungsstoßlinien bzw. Verbindungsstoßflächen in Bezug auf den Krümmungsmittelpunkt des gekrümmten Projektionsschirms offenbart sind.

Das US-Patent 3,992,841 offenbart eine Projektionswandanlage mit einer Projektionswand, die z.B. als Planetarium eingesetzt werden kann. Dabei handelt es sich um einen kuppelförmigen Aufbau, oftmals im amerikanischen auch als "dome" bezeichnet, der eine außenliegende Stützkonstruktion aufweist und an der Innenseite eine konkave Oberfläche besitzt, die als Projektionswand für spezielle Kinoprojektoren benutzt wird. Es ist eine hemisphärische Kuppel beschrieben, deren Innenfläche aus einer Vielzahl von Segmenten aus flachem, plattenförmigen Material gebildet ist. Diese Segmente sind überlappend angeordnet, es sind aber auch Ausführungen beschrieben, bei denen die Segmente aneinanderliegen bzw. stumpf aufeinanderstoßen. Die Segmentierung der Projektionswand, insbesondere der Verlauf der Verbindungsstoßlinien zwischen den Segmenten, erfolgt analog zu dem Kugelkoordinatensystem der Erde, d.h. in Längen- und Breitengraden. Die Längengrade verlaufen von der Spitze der Kuppel bis zu der Grundfläche der Kuppel oder in Teilen davon, die Breitengrade sind in Kreisen parallel zur Grundfläche angeordnet. Eine auf die konvexe Rückseite angebrachte Stützkonstruktion aus Profilen, die diese Segmente trägt, verläuft deckungsgleich zu den Verbindungsstoßlinien der einzelnen Segmente. Diese Umsetzung ist sinnvoll und notwendig, da gerade bei den Verbindungsstoßlinien zwischen zwei Segmenten die Projektionswand mechanisch gestützt werden muss.

In der Patentschrift US-5,724,775 ist eine Bauweise einer hemisphärischen Kuppel beschrieben, wobei die Kuppel aus Segmentbaueinheiten, die jeweils aus Segmenten und einem Unterbau bestehen, schnell auf- und abgebaut werden kann. Bei dieser Ausführung wird nicht zunächst eine Stützkonstruktion und in einem zweiten Schritt die Segmente an der Stützkonstruktion befestigt, sondern die Kuppel wird aus Segmentbaueinheiten zusammengesetzt.

Bei den bekannten Stützkonstruktionen wird bereits die spätere hemisphärische Form der Projektionswand berücksichtigt. Die Konstruktion des Unterbaus ist entsprechend komplex, da sie die innere Oberfläche mit konkaver Gestalt vorbereitet. Bei der Fertigung der Segmente und der Segmentbaueinheiten muss entsprechend genau gearbeitet werden, um vorzusorgen, dass die Innenfläche später die erforderliche Maßhaltigkeit aufweist.

Es ist nun Aufgabe der vorliegenden Erfindung, eine Projektionswandanlage mit einem vereinfachten Aufbau vorzuschlagen.

Die Lösung der Aufgabe erfolgt durch eine Projektionswandanlage, wobei jedes Segment mindestens drei Verbindungsstoßlinien aufweist, wobei jede dieser drei Verbindungsstoßlinien in einer ihr zugeordneten Ebene liegt, die aus den Eckpunkten, zwischen denen die jeweiligen Verbindungsstoßlinie verläuft, und dem Mittelpunkt des Krümmungsradius des zugeordneten Segments gebildet ist, sowie durch eine Projektionswandanlage mit den kennzeichnenden Merkmalen des Anspruchs 6.

Ein Projektionswandabschnitt weist aneinanderliegende Segmente auf, wobei die Innenseite des Projektionswandabschnitts und somit die Innenseite der aneinandergereihten Segmente die Fläche bilden, auf die im späteren Kinobetrieb die Filme projiziert werden. Der Projektionswandabschnitt ist kugelförmig ausgebildet und besitzt einen Krümmungsmittelpunkt. Die Segmente haben eine im wesentlichen drei-, vier- oder mehreckige Grundfläche. Durch Aneinanderlegen von Segmenten kann eine geschlossene Oberfläche gebildet werden, wobei zwischen den Segmenten Verbindungsstoßlinien verlaufen. Mindestens drei Verbindungsstoßlinien eines Segments liegen vollständig oder zumindest zu einem großen Teil in einer Ebene, die durch die Eckpunkte der Verbindungsstoßlinie und dem Krümmungsmittelpunkt des jeweiligen Segments aufgespannt wird.

Das Segment stellt also ein Mehreck auf der Oberfläche einer Kugel dar, deren Teilabschnitt die Projektionswand bildet, wobei mindestens drei Seiten des Mehrecks Abschnitte von großen Kreisbögen der zugeordneten Kugel sind. Ein großer Kreisbogen ist ein auf der entsprechenden Kugel liegender Kreis mit größtmöglichem Umfang.

Es ist nun auch möglich, dass eine Projektionswandanlage mit einer Projektionswand mehrere kugelabschnittsförmige Projektionswandabschnitte aufweist. In diesem Fall betrifft die geometrische Beziehung den Krümmungsmittelpunkt des jeweiligen kugelabschnittsförmigen Projektionswandabschnitts bzw. die Kugel, deren Teilabschnitt den jeweiligen Projektionswandabschnitt bildet. Es können somit mehrere, verschiedene Mittelpunkte bzw. Kugeln vorliegen.

Vorteilhafterweise wird die Teilevorbereitung insbesondere der Segmente mit einem sehr genauen Arbeitsverfahren, dem Laserstrahlschneiden, durchgeführt.

Die Länge der Verbindungsstoßlinien sind zweckmäßigerweise größer als ein Meter ausgeführt. Damit wird erreicht, dass eine Projektionswand aus nicht zu vielen Segmenten zusammengebaut wird. Zur Befestigung der Segmente an einer Stützkonstruktion werden in einer vorteilhaften Weiterführung der Erfindung Gewindebolzen verwendet, die über ein Bolzenschweißverfahren an den Segmenten befestigt sind.

Die Aufgabe wird weiterhin durch eine Projektionswandanlage mit einer Projektionswand gelöst, wobei jede Segmentbaueinheit mindestens drei Verbindungsstoßflächen aufweist, wobei jede dieser drei Verbindungsstoßflächen in einer ihr zugeordneten Ebene liegt, in der auch der Mittelpunkt des Krümmungsradius des zugeordneten Segmentbauteils liegt.

Es ist nun auch möglich, dass der Verlauf der Verbindungsstoßlinien der Segmente nicht mit dem Krümmungsmittelpunkt in einer Ebene liegt und der Verlauf nicht im wesentlichen gradlinig, sondern z. B. wellenförmig oder gezackt ausgebildet ist. Auch ist es möglich, dass die Segmente überlappen oder einen Zwischenspalt aufweisen, der mit Füllmaterial geschlossen wird. Die erfindungsgemäße Projektionswandanlage kann auch unabhängig von der Ausführung, insbesondere dem Verlauf der Verbindungsstoßlinien, der Segmente ausgebildet sein, indem die Verbindungsstoßflächen in einer Ebene mit dem zugeordneten Krümmungsmittelpunkt liegen.

Der Aufbau einer Projektionswandanlage mit einer Projektionswand kann weiterhin dadurch ausgeführt sein, dass eine Baugruppe aus mehren Segmentbaueinheiten gebildet ist. Eine Segmentbaueinheit besteht im einfachsten Fall aus einem Projektionswandsegment, z.B. einem Lochblech, und Profilen, die als Unterbau mit dem Segment verbunden sind. Im eingebauten Zustand in der Projektionswandanlage liegen benachbarte Segmentbaueinheiten an den Verbindungsstoßflächen der Profile aneinander. Die Segmentbaueinheit weist nun mindestens drei Verbindungsstoßflächen auf, die jeweils eine Ebene aufspannen und im eingebauten Zustand mindestens den Krümmungsmittelpunkt des zugeordneten Segments als gemeinsamen Punkt besitzen.

Es liegt eine vorteilhafte Weiterbildung der Erfindung vor, wenn die verwendeten Profile im Querschnitt L-förmig sind. Auch bei abgewandelten Ausführungsformen weisen die Profile zwei Außenflächen auf, die Verbindungsstoßfläche und eine zweite, dazu senkrechte Segmentauflagefläche, die flächig mit dem Segment in Kontakt tritt.

Es liegt weiterhin eine zweckmäßige Ausbildung der Erfindung vor, wenn die Profile nur in einer Richtung einen Biegeradius aufweisen und/oder die zu einer Baugruppe zugehörigen Profile den gleichen Biegeradius aufweisen. Die Profile werden derart gebogen, dass die Segmentauflageflächen in ihrer Längserstreckung einen Radius aufweisen, die Verbindungsstoßflächen in ihrer Längserstreckung weitgehend plan sind.
Im Gegensatz zu Stützkonstruktionen, bei denen die Verbindungsstoßlinien bzw. die Verbindungsstoßflächen einen anderen als den erfindungsgemäßen Verlauf aufweisen, müssen bei der erfindungsgemäßen Vorrichtung die Profile nur in eine einzige Richtung und zwar mit einem gemeinsamen Biegeradius gebogen werden. Durch die Reduzierung der Anzahl der Biegevorgänge an einem Profil werden in der Fertigung Kosten gespart, außerdem wird die Formhaltigkeit der gebogenen Profile erhöht, da das Biegen ein toleranzbehafteter Vorgang ist. Diese fertigungstechnische Verbesserung wird durch die erfindungsgemäße Ausführung einer Projektionswandanlage erreicht.

Weitere Merkmale, Vorteile und Einzelheiten der Erfindung ergeben sich aus den beigefügten Zeichnungen sowie der nachfolgenden Beschreibung bevorzugter Ausführungsformen der erfindungsgemäßen Projektionswandanlage.

Es zeigen:
- Figur 1: eine schematische Darstellung eines Vorführraums mit einer hemisphärischen Projektionswandanlage
- Figur 2: eine schematische Prinzipdarstellung der hemisphärischen Projektionswandanlage in Fig. 1
- Figur 3: eine schematische Prinzipskizze der geometrischen Anordnung von Verbindungsstoßlinien in Bezug auf den Krümmungsmittelpunkt eines Segments in der Projektionswandanlage in Fig. 2
- Figur 4: eine schematische Darstellung einer Segmentbaueinheit in Fig. 1
- Figur 5: eine schematische Schnittdarstellung entlang III - III in Fig. 4
- Figur 6: eine schematische Schnittdarstellung entlang IV - IV in Fig. 1
- Figur 7a,b: eine schematische Draufsicht tangential zu dem Segment und eine Vorderansicht senkrecht zu dem Segment auf die Segmentbaueinheit in Fig. 4

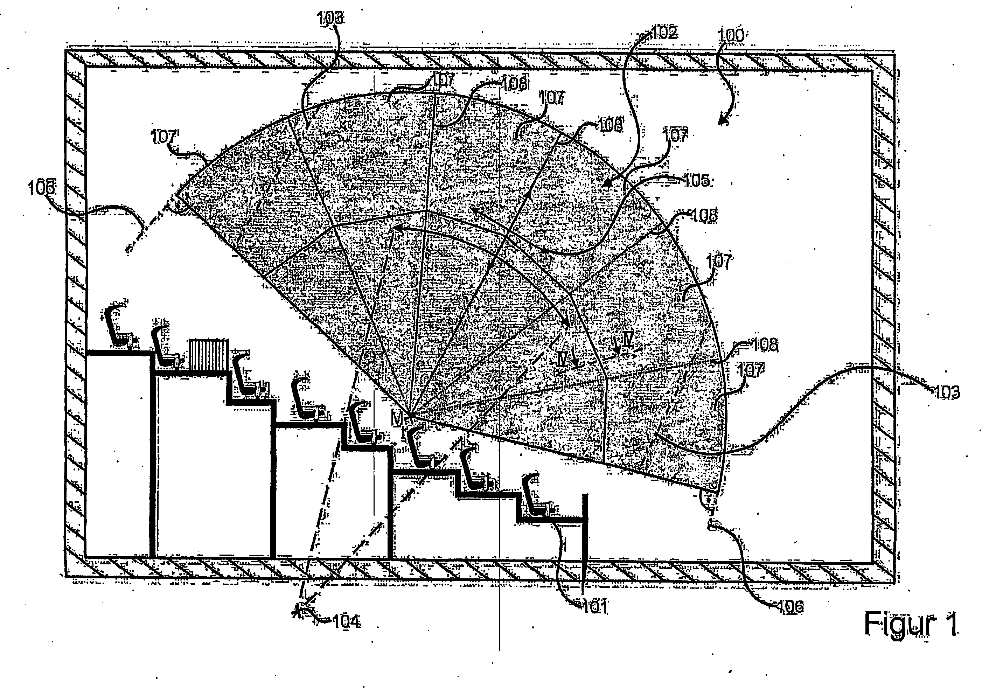

In der Figur 1 ist ein Vorführraum 100 mit auf stufenförmigen Rängen angeordneten Sesseln 101 für Zuschauer dargestellt. Eine über dem Zuschauerraum angeordnete domförmige Projektionswand 102 ist zumindest abschnittsweise kugelförmig ausgebildet. Ein Film wird auf die konkave Innenfläche der Projektionswand 102 durch einen oder mehrere nicht dargestellte Projektoren abgebildet, so dass Zuschauer, die sich in den Sesseln 101 befinden auf der ebenfalls abschnittsweise kugelförmigen und konkaven Innenfläche der Projektionswand 102 den projizierten Film betrachten können. Ein Projektor 200 kann wie in Fig. 1 dargestellt z.B. auf einer Stufe der Ränge angeordnet sein.

Die Projektionswand 102 ist als Kugelabschnitt mit einem Kugelmittelpunkt M ausgebildet. Sie kann auch in Kombination mit beliebigen anderen Oberflächenformen zusammengesetzt sein, insbesondere mit einer tangentialen Verlängerung des Kugelabschnitts, wie es durch die Linien 106 angedeutet ist, mit einem zylindrischen Abschnitt, wie es durch die in Fig. 1 gestrichelten Linien 103 gezeigt ist, und mit weiteren Kugelabschnitten oder mit Freiformflächen. Die genannten Ergänzungen zu dem Kugelabschnitt der Projektionswand 102 können auch nur bereichsweise ausgebildet oder auch asymmetrisch angeordnet sein. Insbesondere bietet es sich an, den vom in den Sesseln 101 sitzenden Zuschauer links und rechts angeordneten Teil der Projektionswand 102 zu verlängern und den vor dem und hinter dem Zuschauer angeordneten Teil der Projektionswand 102 zu verkürzen.
In weiteren Ausgestaltungen kann die Projektionswand 102 beweglich aufgehängt sein, so dass sie eine Drehbewegung um einen Punkt 104 oder eine Linearbewegung in eine oder mehrere Richtungen, wie es durch die Pfeile 105 angedeutet ist, oder eine Kombination von beliebigen Dreh- und Linearbewegungen durchführen kann.
Die Projektionswand 102 ist bei dem dargestellten Ausführungsbeispiel oberhalb der Zuschauerebene angeordnet, sie kann bei abgewandelten Ausführungsformen aber auch so ausgeführt sein, dass sie die Zuschauerebene im Bereich der Sessel 101 abschnittsweise umgibt.
Die Projektionswand 102 ist aus Segmenten 107 zusammengesetzt, wobei die konkaven Innenflächen der Segmente 107 die Projektionsfläche bilden, auf die der Film projiziert wird. Zwischen den einzelnen Segmenten 107 verlaufen die Verbindungsstoßlinien 108.

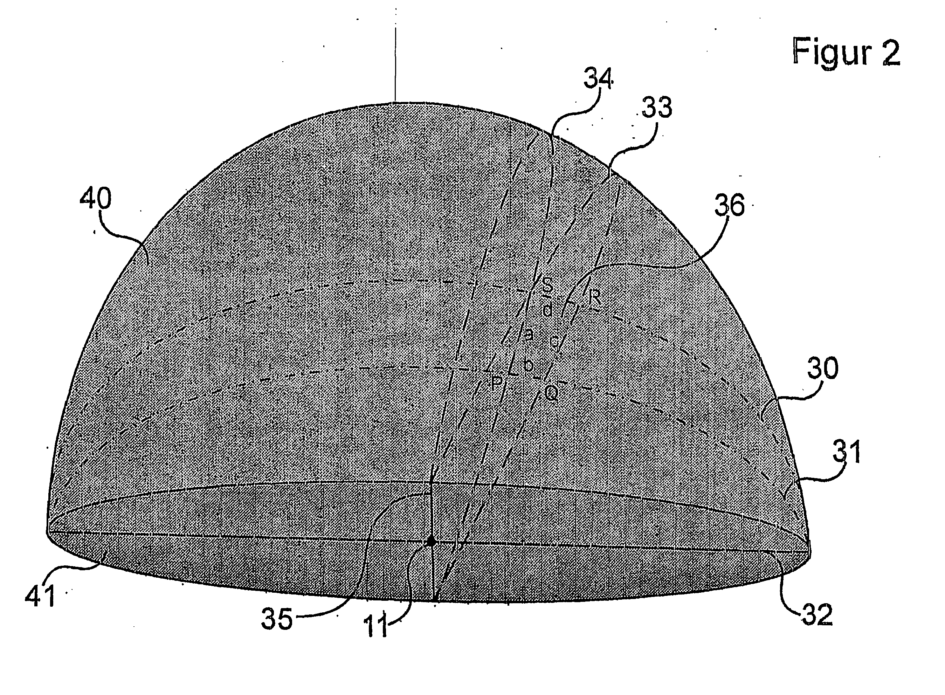

Figur 2 ist eine schematische Prinzipdarstellung eines Ausführungsbeispiels der hemisphärischen Projektionswand in Figur 1. Es handelt sich um eine Halbkugel 40 mit einer kreisförmige Grundfläche 41 und einem Kugelmittelpunkt 11. Anhand dieser schematischen Darstellung soll der Verlauf der Verbindungsstoßlinien eines einzelnen Segments illustriert werden. Die Verbindungsstoßlinien weiterer Segmente werden analog gebildet.
Die Innenfläche der Halbkugel stellt die Projektionsfläche dar. Die Grundfläche 41 und der Kugelmittelpunkt 11 sind zur Darstellung der geometrischen Verhältnisse mit eingezeichnet. Bei diesem Ausführungsbeispiel wird ein halbkreisförmiger Kugelausschnitt für die Projektionswand verwendet. Die Projektionswand kann aber auch aus einem anderen Abschnitt der Kugeloberfläche bzw. aus einem oder mehreren beliebigen Kugelabschnitten gebildet sein, an die auch weitere Projektionswandabschnitte mit beliebigen Oberflächenformen angesetzt sind.

Die Verbindungsstoßlinien eines Segments 36 verlaufen wie in Fig. 2 gezeigt entlang von großen Kreisbögen 30, 31, 33, 34, wobei große Kreisbögen diejenigen Kreise sind, die auf der Oberfläche einer Kugel verlaufen und als konstanten Krümmungsradius den zugehörigen Kugelradius aufweisen. Sie spannen Ebenen auf, die jeweils den zugehörigen Kugelmittelpunkt enthalten. Die Kreisbögen 30, 31, 33, 34 sind Abschnitte von großen Kreisbögen der Kugel, von der die Halbkugel 40 einen Teilabschnitt darstellt. Die Kreisbögen weisen als Radius den Kugelradius des zugehörigen Kugelabschnitts, in diesem Fall der Halbkugel 40, auf. Durch die Kreisbögen wird jeweils eine Ebene aufgespannt, die den Kugelmittelpunkt 11 enthält.
Die Ebenen der Kreisbögen 30, 31 schneiden einander in der Grundfläche 41 entlang der gemeinsamen Schnittlinie 32. Die Ebenen der Kreisbögen 33, 34 schneiden einander in einer in der Grundfläche 41 verlaufenden gemeinsamen Schnittlinie 35.

Bei einer Abwandlung des Ausführungsbeispiels müssen die zu den Kreisbögen zugehörigen Schnittlinien keine gemeinsamen Schnittlinien bilden, aber alle Schnittlinien kreuzen sich im Kreismittelpunkt 11.

Die Verbindungsstoßlinie a verläuft entlang des Kreisbogens 34, wobei der Kreisbogen eine Ebene bildet, die den Kugelmittelpunkt 11 enthält. Die Verbindungsstoßlinien b, c, d verlaufen entlang der Kreisbögen 31, 33, 30, wobei jeder Kreisbogen eine Ebene aufspannt, die den Kugelmittelpunkt 11 enthält. Die Eckpunkte des Segments 36 werden durch die Schnittpunkte P, Q, R, S der Kreisbögen gebildet.

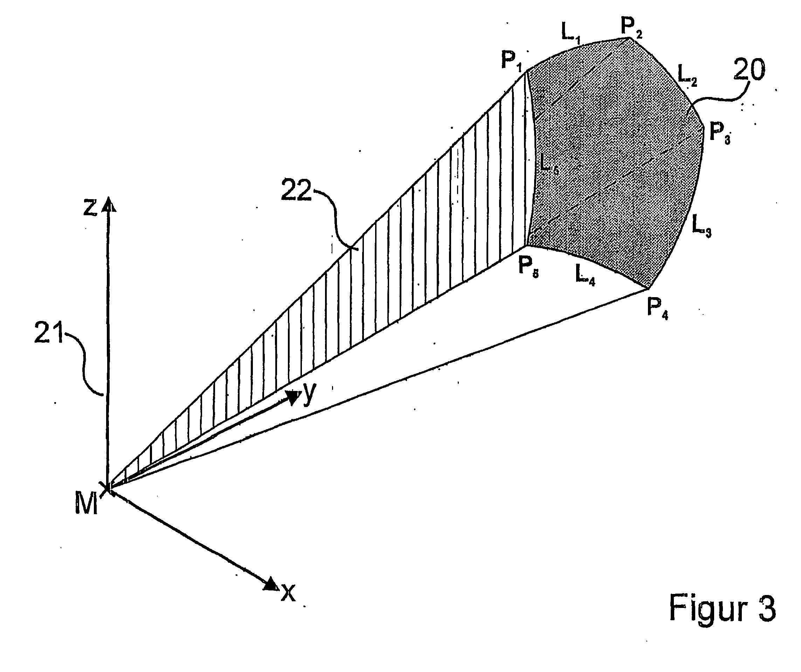

In der Figur 3 sind die geometrischen Zusammenhänge nochmals als Prinzipdarstellung gezeigt. Beispielhaft wird hier ein konkaves Segment 20 diskutiert, welches fünf Ecken aufweist und das ebenfalls Bestandteil einer Projektionswand 102 in Figur 1 oder einer Projektionswand der Halbkugel 40 in Figur 2 sein kann. Die Ecken des Segments 20 sind mit P1, P2, P3, P4, P5 bezeichnet und die Verbindungsstoßlinien mit L1, L2, L3, L4 und L5. Für dieses Segment 20 sind alle der folgenden Bedingungen erfüllt:
L₁ liegt in der Ebene, die durch die Punkte M, P₁, P₂ aufgespannt ist,
L₂ liegt in der Ebene, die durch die Punkte M, P₂, P₃ aufgespannt ist,
L₃ liegt in der Ebene, die durch die Punkte M, P₃, P₄ aufgespannt ist,
L₄ liegt in der Ebene, die durch die Punkte M, P₄, P₅ aufgespannt ist, und
L₅ liegt in der Ebene 22, die durch die Punkte M, P₅, P₁ aufgespannt ist.
Bei diesem Segment 20 ist also für mindestens drei verschiedene Verbindungsstoßlinien erfüllt, dass die jeweilige Verbindungsstoßlinie in einer Ebene liegt, die durch ihre eigenen Endpunkte und den Krümmungsmittelpunkt des Segments 20 aufgespannt ist.
In abgewandelten Ausführungsformen ist das Segment allgemein mehreckig ausgebildet.

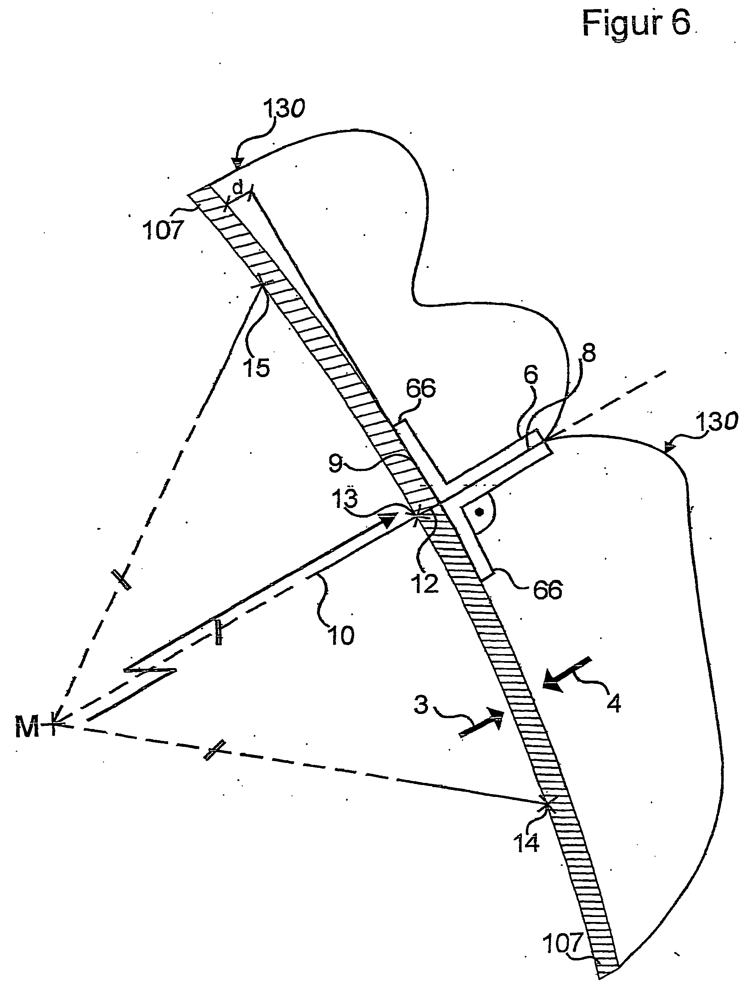

In der Figur 6 ist die schematische Schnittdarstellung entlang IV-IV in Figur 1 gezeigt. Es sind zwei Segmente 107 eines Projektionswandabschnittes sowie zwei Profile 6 dargestellt, wobei ein Profil 6 und ein Segment 107 Bestandteile einer Segmentbaueinheit 130 sind. Die Profile 6 weisen Verbindungsstoßflächen 8 auf. Die benachbarten Segmentbaueinheiten 130 liegen an den Verbindungsstoßflächen 8 der Profile 6 aneinander und bilden auf der konkaven Vorderseite 3 der Segmente 107 eine Verbindungsstoßlinie 13, die in der gewählten Darstellung in Figur 6 senkrecht auf der Blattebene steht.

Die Segmente 107 weisen eine Krümmung auf, die flächig als eine konkave Oberflächenform ausgebildet ist. Die Krümmung der Segmente definiert, wie in Figur 6 gezeigt, jeweils einen Krümmungsmittelpunkt M, wobei aneinandergrenzende Segmente meist den gleichen Krümmungsmittelpunkt M besitzen. Für den Krümmungsmittelpunkt M gilt, dass der Abstand zwischen einem beliebigen Punkt z.B. 14, 15 auf der die Projektionswand bildenden konkaven Vorderseite 3 der Segmente 107 und diesem Krümmungsmittelpunkt M der Abstand R ist. Die Verbindungsstoßlinie 12 weist ebenfalls den Abstand R zu dem Mittelpunkt M auf.

Es bestehen zwischen dem Krümmungsmittelpunkt M, der Verbindungsstoßlinie 12 und der Verbindungsstoßfläche 8 die folgenden geometrischen Beziehungen:
Krümmungsmittelpunkt M und Verbindungsstoßlinie 12 liegen in einer Ebene 10, die in der gewählten zeichnerischen Darstellung in Figur 6 senkrecht auf der Blattebene steht.
Krümmungsmittelpunkt M und Verbindungsstoßfläche 8 liegen ebenfalls in der Ebene 10.
Bei dem in Figur 6 dargestellten Ausführungsbeispiel sind beide Bedingungen erfüllt. Bei abgewandelten Ausführungsformen können die Bedingungen auch alternativ erfüllt sein.

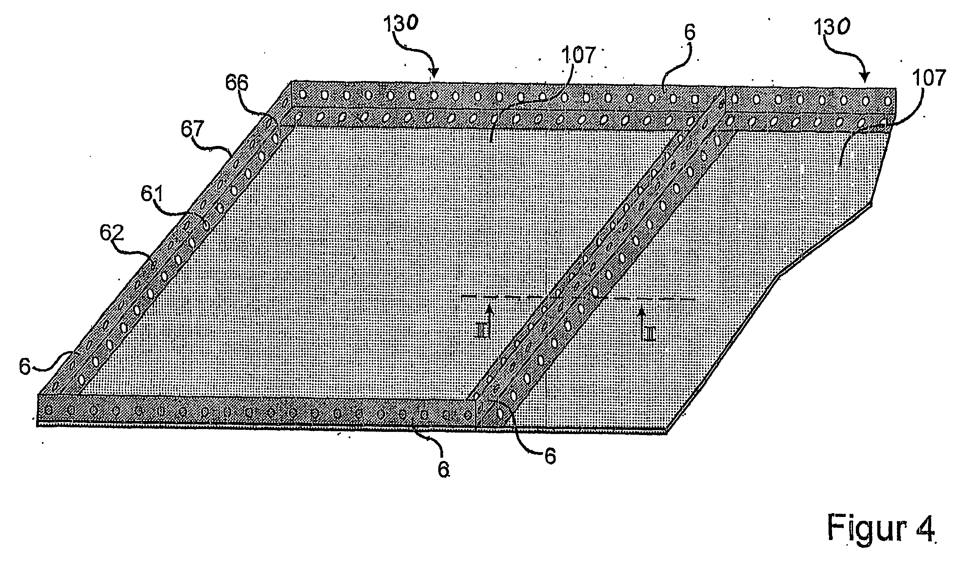

In der Figur 4 ist eine Segmentbaueinheit 130 gezeigt mit einem Segment 107 aus der Projektionswand in Figur 1. Das Segment 107 besteht aus einem flachen, plattenförmigen Material, z.B. können Metallbleche mit Auslassungen, insbesondere Löchern z.B. Lochbleche , oder Kunststoff zum Einsatz kommen. Insbesondere Lochbleche weisen interessante optische Eigenschaften auf, da sie, je nachdem ob eine Beleuchtung von der Vorderseite oder von der Rückseite erfolgt, opak oder transparent erscheinen. Weiterhin wird durch das Einbringen der Löcher in die Segmente deren Gewicht deutlich reduziert.

Das Segment 107 ist dauerhaft plastisch verformt und ist formstabil bei Temperaturänderungen, mechanischer Belastung durch Kippen der gesamten Projektionswandanlage und Alterserscheinungen.

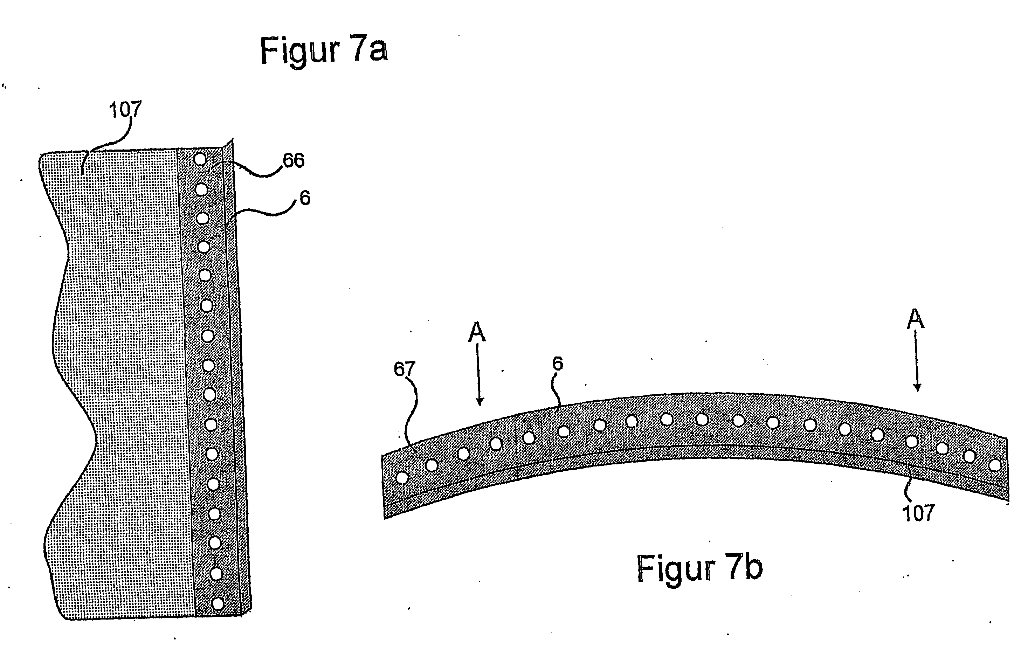

Figur 7a, b zeigt die schematische Draufsicht bzw. Vorderansicht einer Segmentbaueinheit 130 in Figur 6. In beiden Figuren ist das gleiche Segment 107 und das gleiche Profil 6 gezeigt, wobei das Profil 6 mit dem Schenkel 66 flächig auf dem Profil 107 aufliegt und das Profil 6 nur einmal und zwar über den Schenkel 66 und nicht über den Schenkel 67 gebogen ist und folglich das Profil 6 in der in Figur 7a gezeigten Projektion gerade ist wohingegen bei der Projektion in Figur 7b das Profil 6 eine Krümmung mit einem Biegeradius aufweist.

Der durch das tangentiale Auflegen der Profile 6 auf die gekrümmten Segmente 107 resultierende Abstand d in Fig. 6 ist vemachlässigbar klein, da der Abstand R sehr groß im Vergleich mit der Länge des Schenkels 66 ist.

Es ergibt sich ein wesentlicher Vorteil in der Fertigung einer Projektionswandanlage, wenn die Verbindungsstoßlinien 12 oder die Verbindungsstoßflächen 8 bei einer Projektionswandanlage, wie in Figur 6 gezeigt, gelegt werden. Die Profile 6 werden bei der Fertigung nur einmal mit konstantem Biegeradius über eine Achse gebogen, die parallel zur Segmentauflagefläche 9 in Figur 6 und senkrecht zur Längserstreckung der Profile angeordnet ist. Ein weiterer Biegevorgang ist nicht erforderlich.

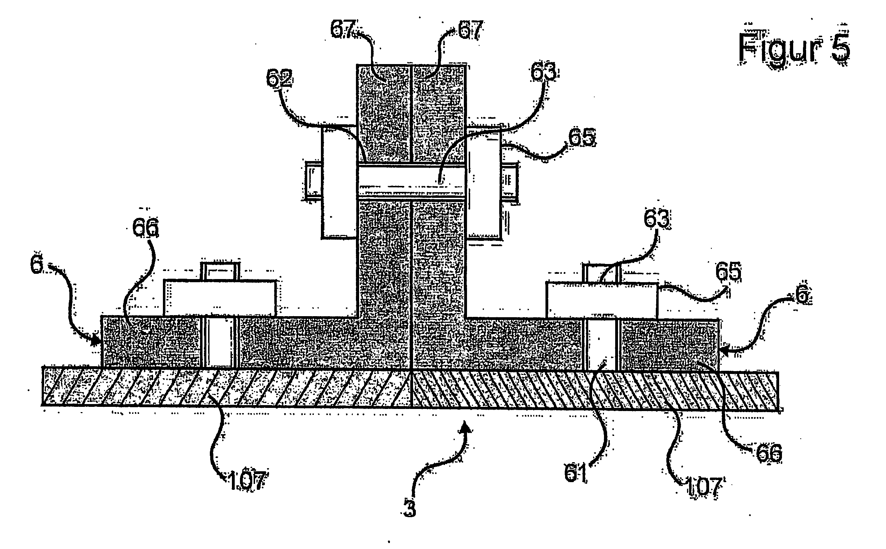

Das Segment 107 ist beschichtet oder weist von sich aus derartige optische Eigenschaften auf, daß ein auf das Segment 107 projiziertes Bild im angenehmen Maße diffus und gleichzeitig brillant reflektiert wird. Insbesondere kann das Segment 107 lackiert, beschichtet oder durch mechanische oder chemische Bearbeitung aufgeraut sein. In den Randbereichen des Segments 107 sind Profile 6 angeordnet.
Die Profile 6 haben einen L-förmigen Querschnitt, in abgewandelten Ausführungen können auch andere Profilarten, wie z.B. U-Profile oder Vierkantprofile, eingesetzt werden. Die Profile 6 weisen zwei vorzugsweise senkrecht zueinander angeordnete Schenkel 66 und 67 auf, wobei der eine Schenkel 66 flächig mit dem Segment 107 in Kontakt ist und die Schenkel 66 eines Segments 107 einer Segmentbaueinheit zueinander gewandt sind. Die Schenkel 66, 67 weisen Auslassungen 61, 62 auf, mittels derer das Profil 6 mit dem Segment 107 verbunden wird bzw. zwei Profile 6 miteinander verbunden werden. Die Verbindungen werden anhand von Figur 5 ausführlich erläutert.

In Figur 5 ist eine schematische Schnittdarstellung entlang der Linie III-III in Figur 4 gezeigt, um die Verbindung zwischen den Profilen 6 bzw. zwischen den Profilen 6 und den Segmenten 107 zu illustrieren. Auf den Segmenten 107 sind Gewindebolzen 63 vorzugsweise durch ein Bolzenschweißverfahren befestigt, so dass dann die Schweißnaht zwischen dem Gewindebolzenende auf dem Segment 107 aufstehend und dem Segment 107 angeordnet ist. Die Profile 6 liegen mit dem Schenkel 66 flächig auf den Segmenten 107 auf. Die Gewindebolzen 63 greifen durch die Auslassungen 61 durch und die Segmente 107 werden mit den Profilen 6 über die Gewindebolzen 63 mit Muttern 65 mittels einer Schraubverbindung verbunden. Die Segmente 107 sind dabei mit den Profilen 6 derart verbunden, daß Verbindungselemente, wie z.B. Gewindebolzen 63 und Muttern 65, nicht über die Vorderseite 3 der Segmente 107 hinausragt bzw. von der Vorderseite 3 erkennbar sind.

Benachbarte Segmentbaueinheiten werden mittels der Profile 6 ebenfalls durch lösbare Verbindungen, vorzugsweise Schraubverbindungen, aneinander befestigt. In dem Ausführungsbeispiel in Figur 5 ist diese Schraubverbindung mit einem Gewindebolzen 63, der durch die miteinander fluchtend angeordneten Auslassungen 62 aneinanderliegender Schenkel 67 von einander stoßenden Profilen 6 geführt ist, und beiderseitig mit Muttern 65 verschraubt ist, realisiert.

Die Segmente 107 liegen spaltfrei aneinander, indem sie z.B. stumpf aufeinanderstoßen und maßgenau, insbesondere durch Laserstrahlschneiden, gesäumt sind. Der Übergang von einem Segment auf das nächste muss derart ausgeführt sein, dass ein Kinobesucher während ein Film auf die Projektionswand projiziert wird, diesen Übergang nicht erkennen kann bzw. nicht als störend wahmimmt. Besonders wenig störend sind die Übergänge, wenn die Segmente nebeneinander ohne Überlappung und ohne Fehlstellen zwischen den Segmenten angeordnet sind.

## Patentansprüche

1. Projektionswandanlage mit einer Projektionswand (102), die einen oder mehrere jeweils kugelabschnittsförmige Projektionswandabschnitte aufweist,
wobei der Projektionswandabschnitt aus mehreren Segmenten (20, 36, 107) gebildet ist,
wobei das Segment Eckpunkte und zwischen den Eckpunkten verlaufende Verbindungsstoßlinien (12, 13, 108) aufweist,
wobei benachbarte Segmente (20, 36, 107) entlang einer gemeinsamen Verbindungsstoßlinie (12, 13, 108) dicht aneinander liegen,
**dadurch gekennzeichnet, dass**
das Segment (20, 36, 107) mindestens drei Verbindungsstoßlinien (12, 13, 108) aufweist, wobei jede dieser drei Verbindungsstoßilnien (12, 13,108) in einer ihr zugeordneten Ebene liegt, die aus den Eckpunkten, zwischen denen die jeweilige Verbindungsstoßlinie (12, 13, 108) verläuft, und dem Krümmüngsmittelpunkt des zugeordneten Segments (20, 36, 107) gebildet ist.

2. Projektionswandanlage nach Anspruch 1,
**dadurch gekennzeichnet, dass**
die Segmente (20, 36, 107) aus gekrümmten, plattenförmigen Elementen bestehen, die vorzugsweise aus ebenen Plattenmaterial hergestellt sind.

3. Projektionswandanlage nach einem der vorhergehenden Ansprüche,
**dadurch gekennzeichnet, dass**
die Grundfläche einer und/oder mehrerer Segmente (20, 36, 107) mehreckig, insbesondere viereckig ist.

4. Projektionswandanlage nach einem der vorhergehenden Ansprüche,
**dadurch gekennzeichnet, dass**
die Längen der Verbindungsstoßlinien (12, 13, 108) größer als 1 Meter, vorzugsweise 1,50 Meter sind.

5. Projektionswandanlage nach einem der vorhergehenden Ansprüche,
**dadurch gekennzeichnet, dass**
die Segmente (20, 36, 107) zur Befestigung an einer Stützkonstruktion Gewindebolzen (63) aufweisen, wobei vorzugsweise vorgesehen ist, dass die Gewindebolzen durch Bolzenschweißverfahren am Segment fixiert sind.

6. Projektionswandanlage mit einer Projektionswand, die eine oder mehrere jeweils kugelabschnittsförmige Projektionswandabschnitte bildende Baugruppen aufweist, wobei die Baugruppe aus mehreren Segmentbaueinheiten (130) gebildet ist, wobei jede Segmentbaueinheit (130) Profile (6) mit Verbindungsstoßflächen (8) und Segmente (20, 36, 107) aufweist, wobei die Segmentbaueinheiten (13) mit den Verbindungsstoßflächen (8) aneinander liegen,
**dadurch gekennzeichnet, dass**
die Segmentbaueinheit (130) mindestens drei Verbindungsstoßflächen (8) aufweist, wobei jede dieser drei Verbindungsstoßflächen (8) in einer ihr zugeordneten Ebene liegt, in der auch der Krümmüngsmittelpünkt des zugeordneten Segmentbauteils liegt.

7. Projektionswandanlage nach Anspruch 6,
**dadurch gekennzeichnet, dass**
die Profile im Querschnitt L-förmig sind.

8. Projektionswandanlage nach Anspruch 6 oder 7,
**dadurch gekennzeichnet, dass**
die Profile in der Längserstreckung nur über eine Seitenfläche gebogen sind.

9. Projektionswandanlage nach einem der Ansprüche 6 bis 8,
**dadurch gekennzeichnet,dass**
die zu einer Baugruppe zugehörigen Profile den gleichen Biegeradius einer Biegung in Richtung des Krümmungsmittelpunkts und senkrecht zur Längserstreckung der Profile aufweisen.

10. Projektionswandanlage nach einem der Ansprüche 6 bis 9,
**dadurch gekennzeichnet, dass**
die Projektionswandanlage Projektionswandabschnitte nach einem der Ansprüche 1 bis 5 aufweist.

## Claims

1. Projection screen installation with a projection screen (102) which has one or more projection screen sections in the shape of spherical sections, the projection screen section being formed from several segments (20, 36, 107), the segment having corner points and connecting abutment lines (12, 13, 108) running between the corner points, neighbouring segments (20, 36, 107) lying close beside one another along a common connecting abutment line (12, 13, 108), **characterized in that** the segment (20, 36, 107) has at least three connecting abutment lines (12, 13, 108), each of these three connecting abutment lines (12, 13, 108) lying in a plane assigned to it which is formed from the corner points between which the respective connecting abutment line (12, 13, 108) runs and the centre of curvature of the assigned segment (20, 36, 107).

2. Projection screen installation according to Claim 1, **characterized in that** the segments (20, 36, 107) consist of curved, plate-shaped elements which are preferably produced from flat plate material.

3. Projection screen installation according to one of the preceding claims, **characterized in that** the base surface of one and/or several segments (20, 36, 107) is polygonal, in particular tetragonal.

4. Projection screen installation according to one of the preceding claims, **characterized in that** the lengths of the connecting abutment lines (12, 13, 108) are greater than 1 metre, preferably being 1.50 metres.

5. Projection screen installation according to one of the preceding claims, **characterized in that** the segments (20, 36, 107) have threaded bolts (63) for fastening on a supporting structure, it preferably being provided that the threaded bolts are fixed on the segment by means of a bolt welding method.

6. Projection screen installation with a projection screen which has one or several assemblies respectively forming projection screen sections in the shape of spherical sections, the assembly being formed from several segment modular units (130), each segment modular unit (130) having profiles (6) with connecting abutment surfaces (8) and segments (20, 36, 107), the segment modular units (13) lying close against one another with the connecting abutment surfaces (8), **characterized in that** the segment modular unit (130) has at least three connecting abutment surfaces (8), each of these three connecting abutment surfaces (8) lying in a plane assigned to it in which the centre of curvature of the assigned segment component lies.

7. Projection screen installation according to Claim 6, **characterized in that** the profiles are of L-shaped cross section.

8. Projection screen installation according to Claim 6 or 7, **characterized in that** the profiles are bent in the longitudinal extent only over a lateral surface.

9. Projection screen installation according to one of Claims 6 to 8, **characterized in that** the profiles associated with an assembly have the same bending radius of a bend in the direction of the centre of curvature and perpendicular to the longitudinal extent of the profiles.

10. Projection screen installation according to one of Claims 6 to 9, **characterized in that** the projection screen installation has projection screen sections according to one of Claims 1 to 5.

## Revendications

1. Système d'écran avec un écran (102), qui comprend une ou plusieurs section(s) d'écran respectivement en forme de calotte sphérique,
la section d'écran étant formée de plusieurs segments (20, 36, 107),
le segment comprenant des points d'angle et des lignes d'assemblage (12, 13, 108) s'étendant entre les points d'angle,
les segments (20, 36, 107) voisins étant adjacents les uns aux autres le long d'une ligne d'assemblage (12, 13, 108) commune,
**caractérisé en ce que**
le segment (20, 36, 107) comprend au moins trois lignes d'assemblage (12, 13, 108), chacune de ces trois lignes d'assemblage (12, 13, 108) se situant dans un plan associé à celle-ci, qui est formé des points d'angle entre lesquels s'étend la ligne d'assemblage (12, 13, 108) respective, et du centre de la courbure du segment (20, 36, 107) associé.

2. Système d'écran selon la revendication 1,
**caractérisé en ce que**
les segments (20, 36, 107) sont constitués d'éléments courbés, en forme de plaques, qui sont fabriqués de préférence dans une matière plastique plate stratifiée en feuilles.

3. Système d'écran selon l'une quelconque des revendications précédentes,
**caractérisé en ce que**
la surface de base d'un ou de plusieurs segment(s) (20, 36, 107) est polygonale, en particulier quadrangulaire.

4. Système d'écran selon l'une quelconque des revendications précédentes,
**caractérisé en ce que**
les longueurs des lignes d'assemblage (12, 13, 108) sont supérieures à 1 mètre et sont de préférence de 1,50 mètres.

5. Système d'écran selon l'une quelconque des revendications précédentes,
**caractérisé en ce que**
les segments (20, 36, 107) destinés à être fixés contre une construction de support comprennent des boulons filetés (63), sachant qu'il est prévu de préférence que les boulons filetés soient fixés au segment par procédé de soudage à l'arc avec percussion.

6. Système d'écran avec un écran qui comprend un ou plusieurs module(s) formant respectivement des sections d'écran en forme de calotte sphérique, le module étant formé de plusieurs unités modulaires de segment (130), chaque unité modulaire de segment (130) comprenant des profilés (6) avec des surfaces d'assemblage (8) et des segments (20, 36, 107), les unités modulaires de segment (13) étant adjacentes aux surfaces d'assemblage (6),
**caractérisé en ce que**
l'unité modulaire de segment (130) comprend au moins trois surfaces d'assemblage (8), chacune de ces trois surfaces d'assemblage (8) se situant dans un plan lui étant associé, dans lequel se situe également le centre de la courbure du composant de segment associé.

7. Système d'écran selon la revendication 6,
**caractérisé en ce que**
les profilés présentent une section transversale en forme de L.

8. Système d'écran selon la revendication 6 ou 7,
**caractérisé en ce que**
les profilés dans l'extension longitudinale ne sont fléchis qu'au-dessus d'une surface latérale.

9. Système d'écran selon l'une quelconque des revendications 6 à 8,
**caractérisé en ce que**
les profilés appartenant à un module comprennent le même rayon de courbure d'une flexion en direction du centre de la courbure et perpendiculairement à l'extension longitudinale des profilés.

10. Système d'écran selon l'une quelconque des revendications 6 à 9,
**caractérisé en ce que**
le système d'écran comprend des sections d'écran selon l'une quelconque des revendications 1 à 5.
